# EUROPEAN PATENT APPLICATION

(11) **EP 2 843 627 A1**
(43) Date of publication of application: **04.03.2015**
(21) Application number: 14182733.7
(22) Date of filing: 28.08.2014
(51) Int. Cl.: G06T 11/60

(54) **Dynamically adjustable distance fields for adaptive rendering**

(30) Priority: 29.08.2013 US 201314013395
(71) Applicant: Monotype Imaging, Inc., Woburn, Massachusetts 01801 (US)
(72) Inventor: Levantovsky, Vladimir, North Andover, MA Massachusetts 01845-3110 (US); Martin, Steven Robert, Topsfield, MA Massachusetts 01983 (US); Taylor, Robert Joseph, Groton, MA Massachusetts 01450 (US)
(74) Representative: Slingsby Partners LLP

(57) **Abstract**

A system includes a computing device that includes a memory configured to store instructions. The computing device also includes a processor to execute the instructions to perform operations that include receiving data representing a portion of a graphical object, and receiving data representative of one or more environmental conditions. For the portion of the graphical object, operations include defining a field of scalar values for presenting the graphical object on a display. Each scalar value is based on a distance between the portion of the graphical object and a corresponding point. Operations also include calculating one or more visual property values based on the scalar values and the one or more environmental conditions, and presenting the graphical object using the calculated visual property values of the field.

## Description

### BACKGROUND

This description relates to techniques for adaptive rendering by using dynamically adjustable distance fields.

With the increased use of electronically presented content for conveying information, more electronic displays are being incorporated into objects (e.g., vehicle dashboards, entertainment systems, cellular telephones, eReaders, etc.) or produced for stand alone use (e.g., televisions, computer displays, etc.). With such a variety of uses, electronic displays may be found in nearly every geographical location for stationary applications (e.g., presenting imagery in homes, offices, etc.), mobile applications (e.g., presenting imagery in cars, airplanes, etc.), etc. Further, such displays may be used for presenting various types of content such as still imagery, textual content such as electronic mail (email), documents, web pages, electronic books (ebooks), magazines and video along with other types of content such as audio.

### SUMMARY

The systems and techniques described here relate to producing and using distance fields for presenting glyphs based upon environmental conditions and potentially adjusting distance field rendering process to dynamically provide a reasonably consistent viewing experience to a viewer.

In one aspect, a computer-implemented method includes receiving data representing a portion of a graphical object, and receiving data representative of one or more environmental conditions. For the portion of the graphical object, the method includes defining a field of scalar values to present the graphical object on a display wherein each scalar value is based on a distance between the portion of the graphical object and a corresponding point. The method also includes calculating one or more visual property values based on the scalar values and the one or more environmental conditions, and presenting the graphical object using the calculated one or more visual property values.

Implementations may include one or more of the following features. Calculating the one or more of the visual property values may include using a modulation function for mapping the scalar values to pixel values. Calculating the one or more of the visual property values may include adjusting a parameter of the modulation function based on the one or more environmental conditions for mapping the scalar values to pixel values. The parameter may represent one of stroke weight and edge sharpness. The modulation function may be a continuous stroke modulation. One of the one or more environmental conditions may represent the physical orientation of the display, ambient light, etc. The corresponding point may represent a pixel of the display, a sub-pixel of the display, etc. Each scalar value may be based on a distance to the portion of the graphical object nearest to the corresponding point. The graphical object may be a glyph. Environmental information may include user related information such as a user-specified preference, presence of a user, etc.

In another aspect, a system includes a computing device that includes a memory configured to store instructions. The computing device also includes a processor to execute the instructions to perform operations that include receiving data representing a portion of a graphical object, and, receiving data representative of one or more environmental conditions. For the portion of the graphical object, operations include defining a field of scalar values to present the graphical object on a display, wherein each scalar value is based on a distance between the portion of the graphical object and a corresponding point. Operations also include calculating one or more visual property values based on the scalar values and the one or more environmental conditions, and presenting the graphical object using the calculated one or more visual property values.

Implementations may include one or more of the following features. Calculating the one or more of the visual property values may include using a modulation function for mapping the scalar values to pixel values. Calculating the one or more of the visual property values may include adjusting a parameter of the modulation function based on the one or more environmental conditions for mapping the scalar values to pixel values. The parameter may represent one of stroke weight and edge sharpness. The modulation function may be a continuous stroke modulation. One of the one or more environmental conditions may represent the physical orientation of the display, ambient light, etc. The corresponding point may represent a pixel of the display, a sub-pixel of the display, etc. Each scalar value may be based on a distance to the portion of the graphical object nearest to the corresponding point. The graphical object may be a glyph. Environmental information may include user related information such as a user-specified preference, presence of a user, etc.

In another aspect, one or more computer readable media storing instructions that are executable by a processing device, and upon such execution cause the processing device to perform operations that include receiving data representing a portion of a graphical object and receiving data representative of one or more environmental conditions. For the portion of the graphical object, operations include defining a field of scalar values for presenting the graphical object on a display, wherein each scalar value is based on a distance between the portion of the graphical object and a corresponding point. Operations also include calculating one or more visual property values based on the scalar values and the one or more environmental conditions, and, presenting the graphical object using the calculated one or more visual property values

Implementations may include one or more of the following features. Calculating the one or more of the visual property values may include using a modulation function for mapping the scalar values to pixel values. Calculating the one or more of the visual property values may include adjusting a parameter of the modulation function based on the one or more environmental conditions for mapping the scalar values to pixel values. The parameter may represent one of stroke weight and edge sharpness. The modulation function may be a continuous stroke modulation. One of the one or more environmental conditions may represent the physical orientation of the display, ambient light, etc. The corresponding point may represent a pixel of the display, a sub-pixel of the display, etc. Each scalar value may be based on a distance to the portion of the graphical object nearest to the corresponding point. The graphical object may be a glyph. Environmental information may include user related information such as a user-specified preference, presence of a user, etc.

These and other aspects and features and various combinations of them may be expressed as methods, apparatus, systems, means for performing functions, program products, and in other ways.

Other features and advantages will be apparent from the description and the claims.

### DESCRIPTION OF DRAWINGS

FIG. 1 illustrates adjusting the rendering of content based upon environmental conditions.
FIGs. 2 and 3 illustrate devices and platforms capable of presenting and adjusting the presentation of content based upon environmental conditions.
FIGS. 4(a) - (c) illustrate using distance fields for presenting glyphs.
FIG. 5 illustrates changing parameters to adjusting text presentations.
FIG. 6 illustrates a content rendering engine executed by a computing device.
FIG. 7 is a representative flow chart of operations for presenting and adjusting content presentations based upon environmental conditions.
FIG. 8 is a block diagram of computing devices and systems.

### DETAILED DESCRIPTION

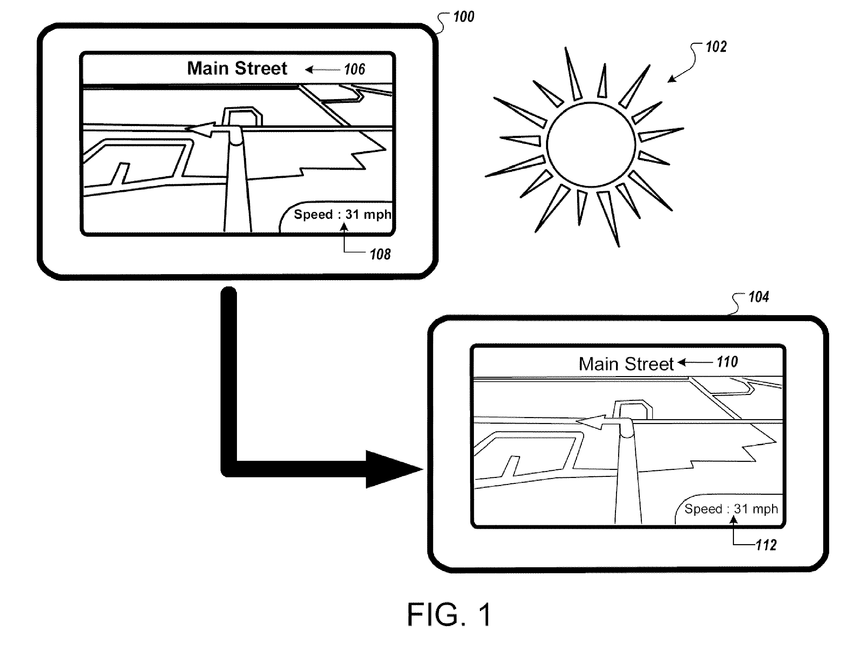

Referring to FIG. 1, with the ever-growing need for information and staying informed, electronic displays are being incorporated into more and more platforms and systems along with being frequently used in standalone applications. Through the expanded use, the displays can be considered as being more exposed to environmental conditions that can affect the content being presented on the displays. Lighting conditions that change over time (e.g., due to the daily and seasonal movement of the sun, abrupt changes in ambient lighting, etc.) can degrade the viewing experience provided by a display. For example, as illustrated in the figure, a portable navigation system (e.g., incorporated into the dashboard of a vehicle, being carried by an individual, etc.) may be asked to operate under dynamically changing environmental conditions. In this illustration, the portable navigation system may be moved into a position such that the viewing experience provided by its electronic display 100 is obscured (e.g., incident sunlight 102 washes out the presented content). To counteract the effects of the incident sunlight 102, operations may be executed (e.g., by the portable navigation system) to reduce the effects of this environmental condition. For example, properties and parameters (e.g., backlighting, etc.) associated with the electronic display 100 may be adjusted. The effects may also be reduced by adjusting the conversion of the content from digital form into a visual form, e.g., rendering of the content, for presenting on the display 100 to substantially retain visual consistency and legibility of the content. In this example, to combat the change in ambient lighting due to the sunlight 102, the sharpness, local contrast, text weight, etc. of the presented content may be adjusted (e.g., presented with crisper boundaries between zones of different tones or colors). To illustrate such an adjustment, an adjusted electronic display 104 is rendered and presented in which sharpness has been increased to aid the viewer. Narrowed and more distinct lines are used to represent the navigation path presented in the adjusted electronic display 104. Similarly, textual information included in the display 104 is sharper (e.g., compared to the original text of the electronic display 100). As illustrated in the figure, to improve the visibility of text, the thickness of the character presented in display 100 (e.g., for text 106 and 108) has been reduced as shown in display 104 (e.g., for corresponding text 110 and 112). Similarly, other types of rendering adjustments may be executed to account for different environment conditions that may impact the viewing experience of the presented content. For example, adjustments may be employed to the rendering technique being used by the device in producing bitmapped images for presentation. In some arrangements rendering adjustments may include changing operations for producing such bitmapped images based upon environmental conditions.

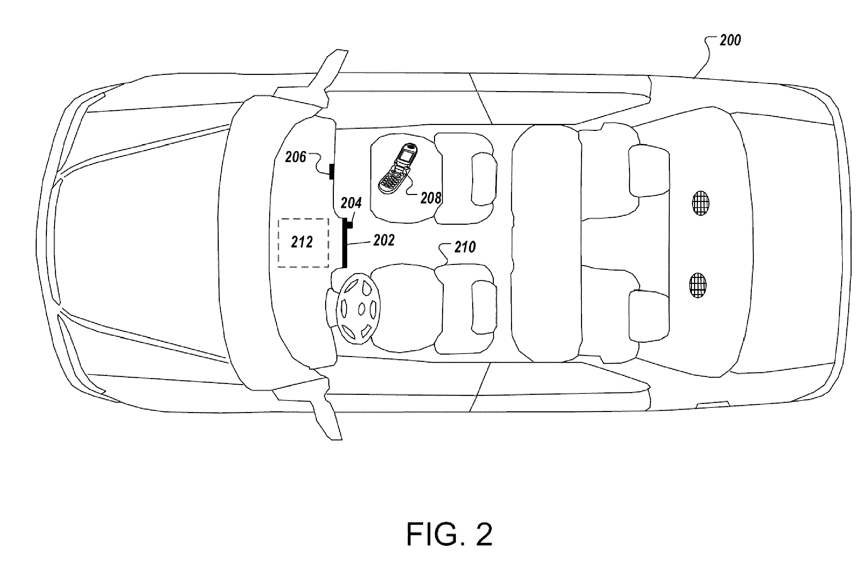

Referring to FIG. 2, a top view of a vehicle 200 is illustrated to demonstrate some environmental conditions that may be experienced and could potentially hinder the viewing experience provided on an electronic display. Along with changes in ambient light due to the time of day and season, other changes in incident sunlight and other types of lighting conditions may be experienced by the vehicle. For example, as the vehicle 200 is maneuvered and driven in different directions relative to the position of the sun of other lighting sources (e.g., lamp posts, street lights, etc.), different levels of incident light levels may be experienced (e.g., from various azimuth and elevation angles). Driving down a road with the sun beaming from different angles as the road curves may cause different lighting conditions. A vehicle may experience various levels of vibration due to the quality of a road surface. Such experienced vibrations may be quantified and accounted for in text rendering adjustment, for example, to compensate for optical effects caused by the vibrations (e.g., motion blur). Similarly, having the sunlight (or light from other sources) partially or fully blocked in a repetitive manner as the vehicle passes trees, buildings and other types of structures or objects may dynamically change the light incident on one or more electronic displays incorporated into the vehicle 200. In this illustration the vehicle 200 includes an electronic display 202 that has been incorporated into its dashboard; however one or more displays incorporated into other locations or other types of displays (e.g., a head's up display projected onto a windshield, window, etc.) may similarly experience such environmental conditions. To interact with the electronic display 202, a knob 204 illustrates a potential control device; however, one or more other types of devices may be used for user interaction (e.g., a touch screen display, etc.).

To sense environmental conditions that may affect the presentation of content, one or more techniques and methodology may be implemented. For example, one or more types of sensing techniques may be used for collecting information reflective of environmental conditions experienced by electronic displays. For example, passive and active sensor technology may be utilized to collect information regarding environmental conditions. In this illustrated example, a sensor 206 (e.g., light sensor) is embedded into the dashboard of the vehicle 200 at a location that is relatively proximate to the electronic display 202. In some arrangements, one or more such sensors may be located closer or farther from the electronic display. Sensors may also be included in the electronic display itself; for example, one or more light sensors may be incorporated such that their sensing surfaces are substantially flush to the surface of the electronic display. Sensors and/or arrays of sensors may be mounted throughout the vehicle 200 for collecting such information (e.g., sensing devices, sensing material, etc. may be embedded into windows of the vehicle, mounted onto various internal and external surfaces of the vehicle, etc.). Sensing functionality may also be provided from other devices, for example, which include sensors not incorporated into the vehicle. For example, the sensing capability of computing devices (e.g., a cellular telephone 208) may be exploited for collecting environmental conditions. Once collected, the computing device may provide the collected information for accessing the environmental conditions (e.g., incident ambient light) being experienced by the electronic display. In the illustrated example, the cellular telephone 208 may collect and provide environmental condition information to access the current conditions being experienced by the electronic display 202. To provide this information various types of technology may be used; for example, one or more wireless links (e.g., radio frequency, light emissions, etc.) may be established and protocols (e.g., Bluetooth, etc.) used to provide the collected information.

Along with natural conditions (e.g., ambient light, etc.), environment conditions may also include other types of information. For example, information associated with one or more viewers of the electronic display may be collected and used for presenting content. Viewer-related information may be collected, for example, from the viewer or from information sources associated with the viewer. With reference to the illustrated vehicle 200, information may be collected for estimating the perspective at which the viewer sees the electronic display 202. For example, information may be provided based upon actions of the viewer (e.g., the position of a car seat 210 used by the viewer, any adjustments to the position of the seat as controlled by the viewer, etc.). In some arrangements, multiple viewers (e.g., present in the vehicle 200) may be monitored and one or more displays may be adjusted (e.g., adjust the content rendering on the respective display being viewed). For example, a head's up display may be adjusted for the driver of a vehicle while a display incorporated into the rear of the driver's seat may be adjusted for a backseat viewer. Viewer activity may also be considered an environmental activity that can be monitored and provide a trigger event for adjusting the rendering of content on one or more displays. Such activities may be associated with controlling conditions internal or external to the vehicle 200 (e.g., weather conditions, time of day, season of year, etc.). For example, lighting conditions within the cabin of the vehicle 200 (e.g., turning on one or more lights, raising or lowering the roof for a convertible vehicle, etc.) may be controlled by the viewer and used to represent the environmental conditions. In some arrangements, viewer activities may also include relatively simple viewer movements. For example, the eyes of a viewer (e.g., driver of a vehicle) may be tracked (e.g., by a visual eye tracking system incorporated into the dash board of a vehicle) and corresponding adjustments executed to the rendering of display content (e.g., adjusting content rendering during time periods when the driver is focused on the display).

Other information may also be collected that is associated with one or more viewers of the electronic display. For example, characteristics of each viewer (e.g., height, gender, location in a vehicle, one or more quantities representing their eyesight, etc.) and information that represents additional information about the viewer's vision (e.g., viewer wears proscription glasses, contacts, sunglasses, has one or more medical conditions, etc.). Viewer characteristics may also be collected from the viewer, compared to being actively provided from the viewer. For example the presence, identity, etc. of a viewer may be detected using one or more techniques. In one arrangement, a facial recognition system (e.g., incorporated into the vehicle, a device residing within the vehicle, etc.) may be used to detect the face of one or more viewers (e.g., the driver of the vehicle). The facial expression of the viewer may also be identified by the system and corresponding action taken (e.g., if the viewer's eyes are squinted or if an angry facial expression is detected, appropriately adjust the rendering of the content presented on the electronic display). One or more feedback techniques may be implemented to adjust content rendering based upon, for example, viewer reaction to previous adjustments (e.g., the facial expression of an anger viewer changes to indicate pleasure, more intense anger, etc.). Other types of information may also be collected from the viewer; for example, user preferences may be collected from a viewer, system-provided, etc. for adjusting content rendering. Audio signals such as speech may also be collected (e.g., from one or more audio sensors) and used to determine if content rendering should be adjusted to assist the viewer. Other types of audio content may also be collected; for example, audio signals may be collected from other passengers in the vehicle to determine if rendering should be adjusted (e.g., if many passengers are talking in the vehicle the content rendering may be adjusted to ease the driver's ability to read the content). Audio content may also be collected external to the vehicle to provide a measure of vehicle's environment (e.g., in a busy urban setting, in a relatively quiet rural location, etc.). Position information provided from one or more systems (e.g., a global positioning system (GPS)) present within the vehicle and/or located external to the vehicle, may be used to provide information regarding environmental conditions (e.g., position of the vehicle, direction of travel, etc.) and used to determine if content rendering should be adjusted. In this particular example, a content rendering engine 212 is included within the dashboard of the vehicle 200 and processes the provided environmental information and correspondingly adjusts the presented content, if needed. One or more computing devices incorporated into the vehicle 200 may provide a portion of the functionality of the content rendering engine 212. Computing devices separate from the vehicle may also be used to provide the functionality; for example, one or more computing devices external to the vehicles (e.g., one or more remotely located servers) may be used in isolation or in concert with the computational capability included in the vehicle. One or more devices present within the vehicle (e.g., cellular telephone 208) may be utilized for providing the functionality of the content rendering engine 212.

Environmental conditions may also include other types of detected information, such as detecting information associated with the platform within which content is being displayed. For example, objects such as traffic signs, construction site warning lights, store fronts, etc. may be detected (e.g., by one or more image collecting devices incorporated into the exterior or interior of a vehicle) and have representations prepared for presenting to occupants of the vehicle (e.g., the driver). Based upon the identified content, the rendering of the corresponding representations may be adjusted, for example to quickly grab that attention of the vehicle driver (e.g., to warn that the vehicle is approaching a construction site, a potential or impending accident with another car, etc.). In some arrangements, input provided by an occupant (e.g., indicating that he is interested in finding a particular restaurant, style of restaurant, etc.) may be used to signify when rendering adjustments should be executed (e.g., when a Chinese restaurant is detected by the vehicle cameras, rending is adjusted to alert the driver to the nearby restaurant).

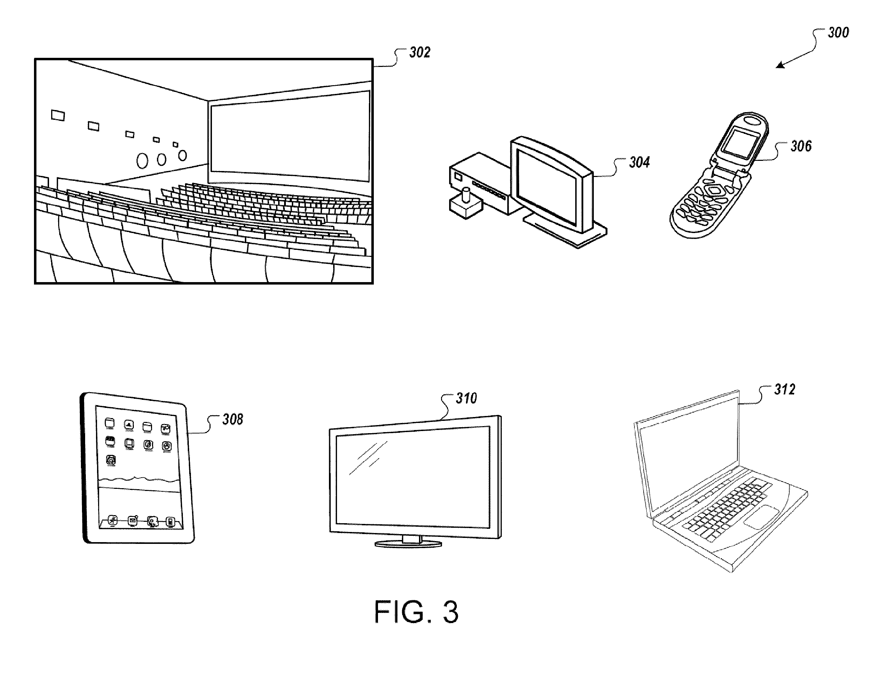

Referring to FIG. 3, a collection 300 of potential systems, platforms, devices, etc. is illustrated that may present content that is adjusted based upon environmental conditions. For example, content (e.g., graphics, text, etc.) that is presented on one or more large electronic displays in a multiple viewer venue 302 (e.g., movie theater, sporting stadium, concert hall, etc.) may be adjusted based upon environmental conditions. Content may be rendered in one manner for one environmental condition (e.g., normal ambient lighting conditions as viewers are being seated) and rendered in another manner for another environmental condition (e.g., after the house lights have been significantly dimmed for presenting a feature film or other type of production). As such, rendering may be adjusted to assist the viewers for reading content (e.g., presenting an emergency message to all viewers) under dynamically changing environment conditions of the venue. Content being presented by a gaming console 304 (or one or more similar devices) may be adjusted for one or more environment conditions. As such, content may be adjusted based upon changing lighting conditions (e.g., a light is inadvertently turned on). Content adjustments (e.g., rendering adjustments) may also be based upon actions of the player, for example, if the viewer is being physically active to interact with a game title (e.g., the motion of the player is detected and used during game play), the rendering of the content may be adjusted to improve the active player's ability to recognize (e.g., read) the presented content. Hand held devices such as a cellular telephone 306, a tablet computing device 308, a smart device, etc. may execute operations of a content rendering engine for adjusting presented content for changing environmental conditions. For example, as a viewer carries such a device from an indoor location (e.g., an office building) to an outdoor location (e.g., a parking lot), environmental conditions such as light levels may drastically change (e.g., ambient light levels may increase on a sunny day, decrease at night, etc.). In another example, another type of hand held device (e.g., an eReader) might incorporate one or more sensors (e.g., light sensors) for detecting light levels for adjusting the rendering of the text being presented by the device. Such hand held devices may also include other sensors for detecting environmental conditions. For example, motion sensors (e.g., accelerometers), view position sensors (e.g., for detecting the position, angle, etc. of a reader's eyes relative to the device's screen, etc.) may be used to collect information for adjusting the rendering of text for presentation on the device. For example, as the orientation of a hand held device (e.g., the tablet computing device 308) is altered by a user (e.g., rotating the device approximately 90° to provide a landscape display rather than a portrait display), the movement may be sensed and the presentation of the content may be adjusted to account of the changed view. A television 310 or different types of computing devices (e.g., a laptop computer system 312) may also experience changing environmental conditions that could hinder a viewer's ability to comprehend content presented on their corresponding electronic displays. By accounting for changing environmental conditions, presented content can be dynamically adjusted to improve legibility and potentially reduce the probability of dangerous situations. For example, by adjusting content due for environmental conditions, a vehicle driver may not inadvertently focus on an electronic display for an extended period to view obscured content adjusted, thereby creating a potentially dangerous situation. Adjusting the rendering of content on one or more displays may also include medical devices, safety equipment, manufacturing and other types of applications. Further, in some arrangements a printer or similar device that produces a hard copy of content (from an electronic source such as a computing device) may be considered an electronic display, in which case rendering adjustments can be utilized to compensate, e.g., for specific deficiencies of toner/ink transfer mechanism, paper quality, etc.

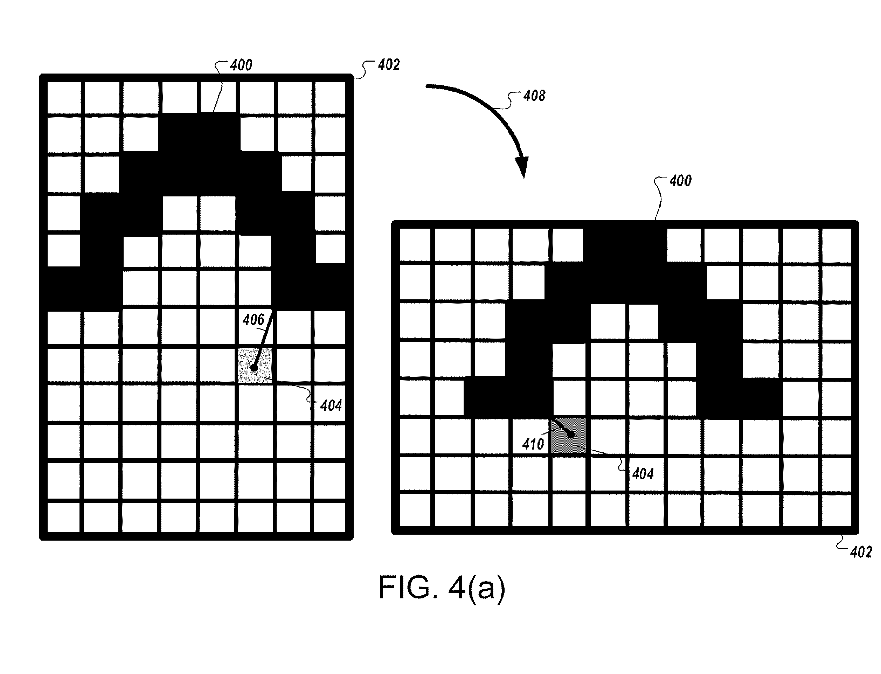

Referring to FIGS. 4(a)-(c), one or more techniques may be implemented for preparing, adjusting, etc., content for presentation based upon one or more environmental conditions. For example, the processing, presentation, etc. of portions of graphical objects such as individual glyphs may be adjusted based upon the conditions. In general, to digitally present text and similar graphics, various types of font families (e.g., Times New Roman, Arial, etc.) may be used that typically include a set of fonts, e.g., regular, italic, bold and bold italic. Each font includes a set of individual character shapes called glyphs and each glyph can be distinguished by its various design features (e.g., geometry, stroke thickness, serifs, size, etc.). One or more techniques may be utilized for representing such fonts; for example, outline-based representations have been adopted in which lines and curves are used to define the borders of glyphs. Scalable to a variety of sizes, outline fonts can be processed for rendering on various types of output devices.

With reference to the FIG. 4(a), using an outline font technique, the borders of a glyph of a particular font may be defined as a set of lines and curves. In some arrangements, relatively small discrete line segments are used to approximate the continuous nature of these lines and curves. In many situations, by approximating a smooth curve with line segments of discrete pixels of a rectangular grid, the curve may appear jagged. Similarly, if a line segment does not properly align with the pixel grid, the line may appear jagged. To reduce such visual effects, the line segments may be blurred by appropriately assigning gray levels to the points (e.g., pixels) included in the segments or located nearby (e.g., adjacent to) the points of the line segments (e.g., using a process referred to as antialiasing). One or more techniques may be implemented to introduce such antialiasing to line segments that define the lines and/or curves of the glyph. For example, a distance-based antialiasing technique may be used for defining the gray scale values by computing a distance field, which can be considered a scalar field that specifies a distance from a particular point on a display to the glyph outline. In general a scalar can be considered a quantity that only represents a single numerical value such as magnitude. The distance field of a glyph measures the minimum distance from any point (e.g., representing a pixel, a sub-pixel, etc.) to the edge of the glyph outline. As such a distance field can be considered an array of scalar values that specifies the minimum distance from a sample point to a point or edge of a glyph, where the distance may be signed to distinguish between the distances from points inside and outside of the contour of the glyph. For example, negative values may be assigned to distances for points located outside of a glyph's contour while positive values are assigned to distances inside the glyph's contour. One or more techniques may also be implemented for defining the points (e.g., pixels, sub-pixels such as red, green and blue (RGB) sub-pixels, etc.) associated with the distance field. For example, rather than using points that are evenly distributed, the points of the distance field may be irregularly sampled based upon the distance of the sample points. In one technique, referred to as adaptive distance fields (ADFs), the amount of distance point samples increase as the distance between points changes at a more rapid rate. As such, ADFs may be considered as using adaptive, detail-directed sampling, with high sample rates in regions where the distance field contains fine detail and low sampling rates where the distance field varies in a generally smooth manner.

Different conventions may be used for indicating if a point is located inside the outline of the glyph or outside the outline of the glyph. For one convention, negative distances may be used to define a point located exterior to the outline of the glyph and positive distances used to define points located interior to the glyph outline. Once distances are determined, the distance field values may be used to determine the visual property values (e.g., gray scale value, a density value, etc.) for the individual points (e.g., pixels, RGB sub-pixels, etc.). For example, one or more thresholds may be defined for use with the distance field values to determine the visual property values to be presented for the corresponding point or points. In one arrangement, one threshold may define a cutoff distance beyond which a minimum visual property value is assigned (e.g., a fully transparent density value of 0). Similarly, another threshold may define an interior cutoff distance within which a maximum visual property value is assigned (e.g., a completely opaque density value of 255). Along with defining thresholds to clearly define cutoff distances, one or more techniques may be implemented for mapping distances (from a distance field) to visual property values (e.g., pixel values, sub-pixel values, etc.). For example, distance values from a distance field such as an adaptively sampled distance field (ADF) may be processed (e.g., by anti-aliasing processing) to reduce the jaggedness of edges and corners being presented. Such ADF's may be considered explicit ADF's that are produced by using a top-down spatial subdivision to generate a spatial hierarchy of explicit cells, and each explicit cell contains a set of sampled distance values. One or more reconstruction techniques may be implemented to reconstruct a distance field within each explicit cell and map the reconstructed distances to appropriate density values. Alternatively, rather than initially producing cells, implicit ADF cells may be generated during rendering (e.g., in an on-demand manner). For this technique, preprocessing is executed (e.g., on data that represents a glyph) and implicit ADF cells are generated and rendered by first reconstructing the distance field within the implicit ADF cell and then mapping the reconstructed distances to the appropriate density values.

One or more techniques may be implemented for mapping distances from a distance field (e.g., an ADF) to glyph pixel values or other types of visual property values. In general, mapping such quantities can be considered as changing a value that represents one quantity (e.g., distance) into another value that represents another quantity (e.g., a numerical value that represents a pixel color, density, etc.). For one technique, a modulation function may be applied to the scalar distance field values to produce visual property values such as pixel values (e.g., for a bitmap image of the glyph). In one arrangement, the modulation function may be a continuous stroke modulation (CSM) that is capable of modulating one or more visual property when producing pixel values. For example, one or more parameters of the CSM may be used to control the mapping of the distance field values to pixel values (or other types of visual property values). Such parameters may represent various visual properties and other aspects for presenting glyphs or other types of graphical objects. For example, one CSM parameter may represent stroke weight and another parameter may represent edge sharpness. By changing these parameters, the appearance of glyphs, characters, fonts, etc. may be adjusted to appear, for example, sharper, blurred, thinner, thicker, etc.

Various techniques may be implemented for selecting information associated with applying a modulation function to map a distance field values to visual property values. For example, one or more parameters of the modulation function may be selected; one or more values for the individual parameters may be selected, etc. In one arrangement, selections may be executed through an interface that presents appropriate information to a user (e.g., selectable modulation function parameters, selectable parameter values, one or more data fields for user entered parameter values, etc.). Other types of information and data may also be used for selecting parameters, determining parameter values, etc. For example, one or more environmental conditions may be used for selecting parameters (e.g., stroke weight, edge sharpness, etc.), parameter values, etc. for mapping distance field values to corresponding pixel values. In concert with environmental conditions, other types of conditions may factor into the selecting parameters (e.g., modulation function parameters), selecting or determining values (e.g., parameter values), etc. For example, user preferences (e.g., user specified preferences), user related information (e.g., system collected viewer characteristics, viewer provided characteristics, detected presence of a particular viewer, etc.), properties of a display or a display device (e.g., display size, resolution, etc.), display characteristics (e.g., foreground and background colors, etc.), font type (e.g., a scalable font such as an OpenType font), font characteristics (e.g., point size, font attributes such as a bold typeface, etc.) may be used in the determinations.

Once determined, the modulation function parameters (e.g., CSM parameters), parameter values, etc. one or more operations may be executed. For example, along with using the parameters with the modulation function to map distance field values to pixel values, the parameters may be stored for later retrieval and use. Such storage may be local to the device presenting the text or storage may be local at one or more devices external to the presentation device. For example, the parameters, information associated with the parameters, etc. may be remotely stored at a server (or a collections of servers) for use in other situations. In some arrangements, the parameters and associated information may be provided as a service through a service provider or other type of entity. Different types of storage techniques may be implemented, for example, one or more tables may be employed to store the parameters and corresponding information. In some arrangements, the parameters and/or associated information (e.g., parameter values) may be stored with one or more assets. For example, the parameters and associated information may be stored in a file that also stores an asset (e.g., CSM parameters may be stored in a file that contains data of an electronic document). By commonly storing the parameters and the asset, one or more operations could be executed that used both sets of stored information. For example, along with presenting the stored asset (e.g., the text of an electronic document), the stored parameters and related information (e.g., parameter values) may be presented (e.g., to a user). By presenting such information, the user can interact with the presented information (e.g., edit, adjust, etc. parameters and parameter values through a user interface, application, etc.) for adjusting the presented text (e.g., substantially in real time) as desired.

To demonstrate a distance field representation, FIG. 4(a) presents a representation of a segment 400 as a dark colored curve that forms the outline of a portion of a glyph (or another type of graphical object). To graphically illustrate a distance field, a grid 402 of discrete pixels is presented that drastically exaggerates the size of each pixel for ease of viewing. As shown in the figure, an exemplary pixel 404 is located away from the glyph segment 400. To define the scalar value of the distance field for the pixel 404, the distance between the pixel and the glyph segment 400 is determined by using one or more techniques. For example, the minimum distance between the center of the pixel 404 and the closest point of glyph segment 400 may be determined (e.g., as represented by the line 406). In a similar manner, scalar values may be determined for other (or all) of the pixels included in the gird. For example, a scalar values may be associated with each pixel based upon the corresponding minimum distance from the pixel to the corresponding closest point of the glyph segment. Based upon the assigned scalar value, a visual property value may be assigned to the corresponding pixel. For example, a particular color (e.g., gray scale level), shade, brightness, density, texture, etc. may be assigned based upon the scalar value of the distance field for the pixel. The assigned visual property value may also take into account other factors such as a modulation function (e.g., CSM), one or more parameters associated with the modulation function, etc. In the illustrated example, a gray scale level has been assigned to the pixel 404 based upon distance between the center of the pixel and the nearest portion of the glyph segment 400.

The modulation function, one or more parameters of the modulation function, etc. may be based upon one or more conditions such as environmental conditions. For example, based on an environmental condition, one or more modulation functions may be selected for assigning visual property values to pixels based upon their corresponding distance field values. Similarly, one or more parameters associated with the modulation function (or multiple modulation functions) may be selected, adjusted, etc. based upon a condition such as an environmental condition.

In the illustrated example, the distance field and associated distance field values can be considered as being fixed after being calculated. Since the pixels of the grid 402 correspond to display pixels (e.g., pixels of a computing device display), the relationship between the glyph segment 400 and the pixels typically remain unchanged. For example, the minimum distance between each pixel of the grid 402 and the closest point of the glyph segment may be constant along with the corresponding scalar values of a calculated distance field. As such, the mapping of the scalar values of the distance field to corresponding visual property values may only change based upon the technique used to perform the mapping (e.g., the modulation function, parameters of the modulation function, etc.). However, in some situations, the relationship between the grid pixels and the presented glyph segment may change thereby causing the distance field, scalar values of a distance field, etc. to change. For example, changes to one or both of the endpoints used to define the minimum distance between a pixel and a glyph segment can cause the corresponding scalar value of the distance field to change. In one situation that could cause such a change; the orientation of the grid may be changed to still provide substantially the same viewing perspective of the presented glyph. For example, a computing device presenting the glyph (e.g., a tablet computing device) may be physically rotated 90° clockwise (as indicated by the arched line 408). To account for this orientation change and still present the same view, the glyph segment may be similarly rotated (e.g., rotated 90° clockwise). However, as illustrated in the figure, while the glyph segment 400 has been rotated present the same view, the distance between the grid pixels and the glyph segment may change. For example, while the pixel 404 still resides at the same location of the display; due to the 90° clockwise rotation, the pixel 404 is now located differently with respect to the glyph segment 400. As such, the distance between the center of the pixel 404 and the closest point of the glyph segment 400 has changed (as represented with line 410). In this example, the distance has decreased (as indicated by comparing the length of line 406 to the line 410). As such, the distance field needs to be recalculated based upon this orientation change of the computing device. Further, mapping of the recalculated scalar values of the distance field to corresponding visual characteristics (e.g., gray scale values) may need to similarly be recalculated. For illustration in this example, based upon the new distance value (represented by the line 410) indicating that pixel 404 is closer to the glyph segment 400 than the previous distance value (represented by the line 406), a darker gray scale level is assigned to the pixel.

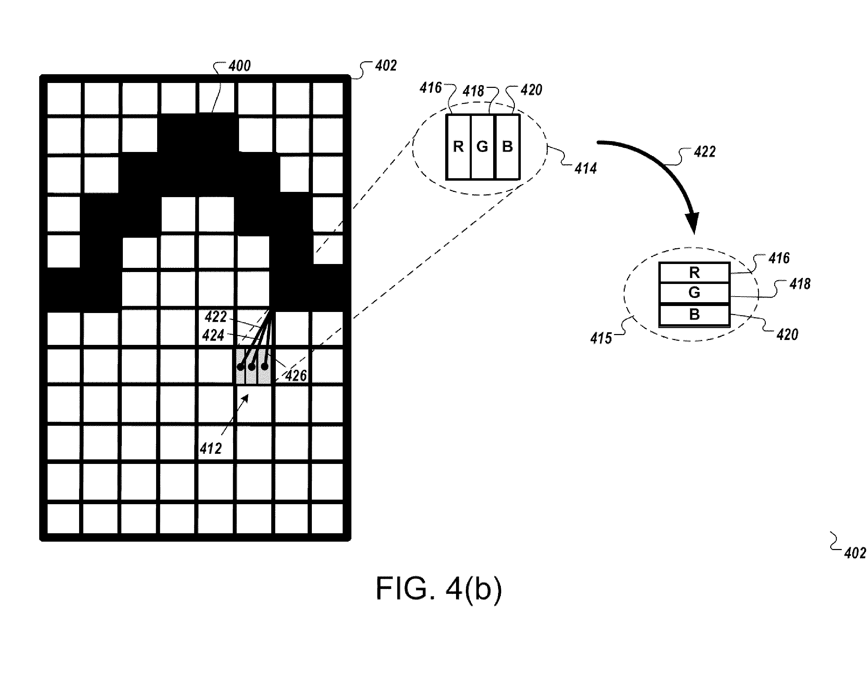

Other situations may similarly occur in which the distance field may need to be recalculated. For example, the geometry of individual pixels and segments (sub-pixels) that form individual pixels may impact image rendering. Referring to FIG 4(b), the glyph segment 400 is again presented on the grid 402; however, each pixel used to present the glyph is formed from multiple sub-pixels that independently convey visual information. In this particular arrangement, each pixel is formed from three rectangular shaped sub-pixels and each sub-pixel is assigned one of three colors for presenting visual information. While numerous conventions may be employed, each sub-pixel provides an intensity level for the color red, green or blue in this example. This particular arrangement is demonstrated with a pixel 412, which is also presented in an exploded view within the dashed-line circle 414. For pixel 412, each of the rectangular-shaped sub-pixels (i.e., red sub-pixel 416, green sub-pixel 418 and blue sub-pixel 420) is vertically oriented. Similar to the rotation demonstrated in FIG. 4(a), the display presenting the glyph may be physically rotated 90° clockwise (as indicated by the arched line 422) of effected by another type of environmental condition. Based this rotation, orientation of each pixel individually changes and correspondingly the orientation of each sub-pixel changes. As illustrated, due to the rotation, the orientations of the rectangular shaped sub-pixels are now horizontal (as shown in dashed-line circle 415). Along with the orientation change, the distance between the center of each sub-pixel and the closest point of the glyph segment has also changed. Before the rotation, the distance field values for each sub-pixel may be defined from the center of each vertically oriented rectangular sub-pixel (as represented by the respective lines 422, 424 and 426). Once rotated, the centers of each sub-pixel 416, 418, 420 correspondingly change position along with the respective distances between each center and the closest point of the glyph segment 400. So due to the rotation of the display (e.g., of a computing device), the distance field is recalculated. Further, mapping of the recalculated scalar values of the distance field to corresponding visual characteristics (e.g., gray scale values) may need to similarly be recalculated. For example, based upon the new distance values for the sub-pixels, the individual visual characteristics of each pixel may be changed (e.g., increasing or decreasing the intensity level assigned to the red, green, and blue sub-pixels, individually or in combination).

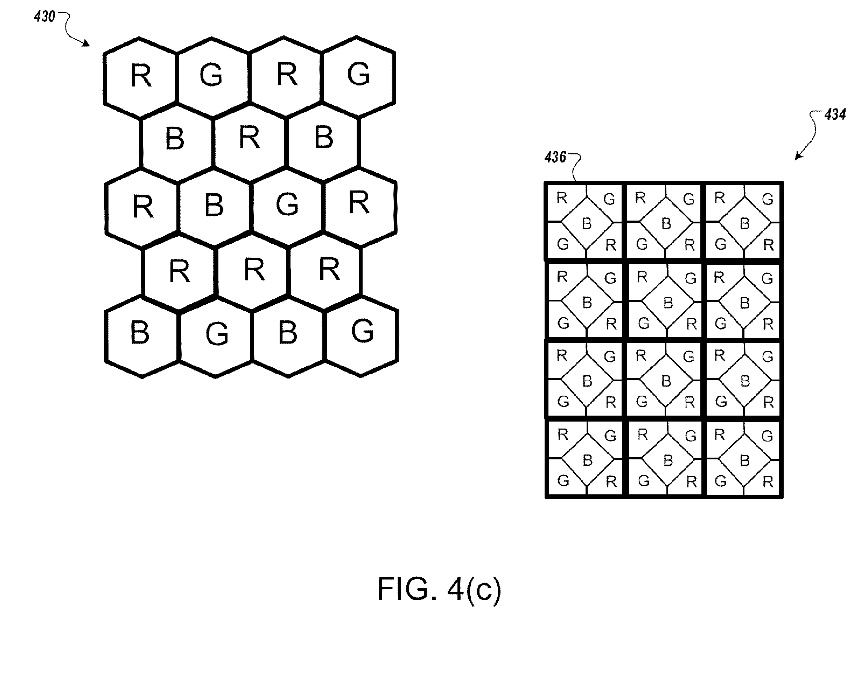

Referring to FIG. 4(c), along with sub-pixel orientation having a potential effect on rendering, other pixel and sub-pixel characteristics may also have impact. For example, the geometry of pixels and sub-pixels may prompt recalculation of distance fields. Unlike the rectangular shaped pixels and sub-pixels shown in FIGS. 4(a) and 4(b), hexagon shaped sub-pixels are presented. In this illustration, a collection 430 of hexagon-shaped sub-pixels is presented in which each sub-pixel is assigned one of three colors (e.g., (R)ed, (G)reen or (B)lue). Compared to grouping rectangular-shaped sub-pixels to form pixels (e.g., vertically or horizontally stacking), adjacent hexagon-shaped sub-pixels may be grouped differently to define pixel formations. As such, the geometry of sub-pixels or pixels may call for distance field recalculations. For example, a glyph (or other type of graphical object) presented on a display composed of pixels defined by hexagon shaped sub-pixels may need a distance field that is different from the distance field calculated for a display composed of pixels defined by rectangular shaped sub-pixels. Additionally, changing environmental conditions (e.g., rotation of a display device, ambient lighting conditions) can also trigger the distance field recalculation and/or re-mapping of scalar field values.

In some arrangements, pixels and sub-pixels may have symmetric geometries such as the collection of hexagon shaped sub-pixels 430 and the pixels and sub-pixels shown in FIGS. 4(a) and 4(b). However, display devices may also implement asymmetric geometries or combinations or symmetric and asymmetric geometries for pixels, sub-pixels, etc. For example, a collection of pixels 432 illustrates that individual pixels may be composed of asymmetrically shaped sub-pixels. In this arrange, each pixel (e.g., pixel 436) employs a sub-pixel matrix scheme (e.g., a PenTile matrix) to define and arrange the sub-pixels. In particular, the geometric layout of the sub-pixel arrangement a two red sub-pixels, two green sub-pixels, and one central diamond-shaped blue sub-pixel. Based on distance fields calculated for other layouts, a distance field recalculation may be warranted along with re-mapping of the recalculated scalar values of the distance field to corresponding visual characteristics (e.g., RGB intensity levels).

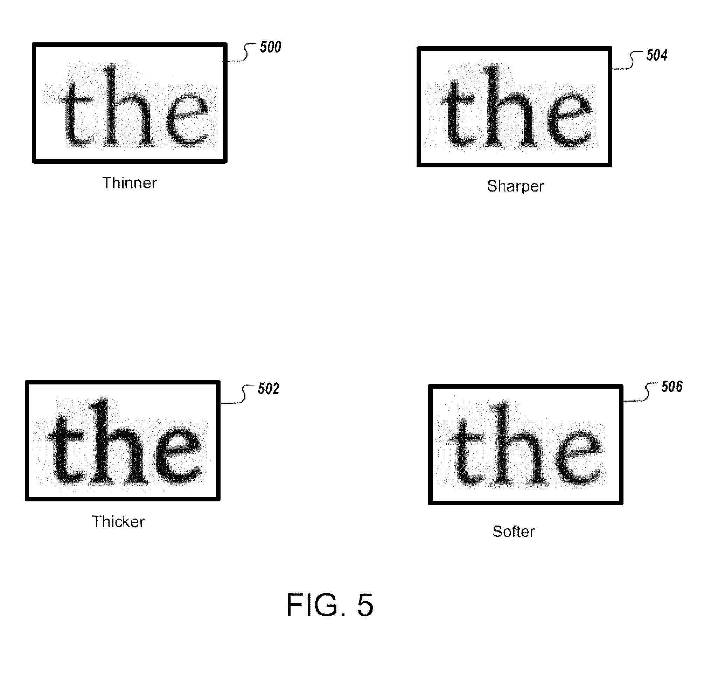

Referring to FIG. 5, four examples are presented that illustrates how adjusting modulation function, function parameters (e.g., CSM parameters), etc. can change the rending of characters being presented in a particular font. In this example, values of modulation function parameters are adjusted to demonstrate corresponding changes to the appearance to the characters. To cause the adjustments, one or more environmental conditions are used in isolation or in combination with one or more other conditions (e.g., a user selected preference). For example, sensed orientation changes, location changes, etc. to the display device (e.g., a tablet computing device, smart phone, etc.) may trigger adjustments to the parameters, parameter values, etc. In some arrangements, the modulation function parameters (e.g., CSM parameters) may be selected (e.g., newly selected, re-selected, etc.) based upon the environmental conditions, changes to the environmental conditions, etc. For example, two CSM parameters (e.g., stroke weight, edge sharpness, etc.) may initially be selected, but based upon changes to the environmental conditions, more, less or different parameters may be selected for rending the characters. CSM parameter values may also be selected, adjusted, etc. based on one or more environmental conditions. For example, and as illustrated in the figure, stroke weight may be decreased (as represented by the characters in rendered image 500) or increased (as represented by the characters in the rendered image 502). Other scaling techniques may also be implemented for adjusting parameter values (e.g., decreasing the stroke weight value may cause an increase in thickness). Similarly, the value of the CSM parameter that represents edge sharpness may be adjusted to improve readability of the rendered text. For example, the parameter value associated with edge sharpness may be increased for increasing the level of sharpness (as represented by the characters in rendered image 504). Correspondingly, decreasing the edge sharpness parameter value may soften the sharpness of the character edges (e.g., as represented in rendered image 506). Similar to the stroke weight parameter, other types of numerical scales may be implemented, for example, increasing the edge sharpness parameter value may soften edges of rendered text characters and decreasing the value may sharpen the character edges to improve the viewing based upon the one or more environmental conditions being experienced.

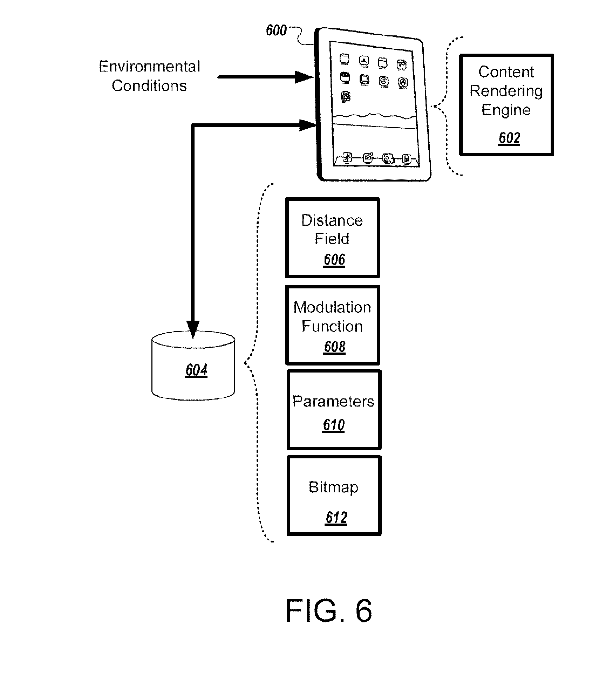

Referring to FIG. 6, a computer system 600 is illustrated as including a content rendering engine 602 that is capable of applying a modulation function (e.g., CSM) for mapping a distance field representation of a glyph, character, text, etc. to visual property values (e.g., pixel values) for presentation (e.g., produce a bitmapped image). The content rendering engine 602 may also be used for selecting parameters of the modulation function (e.g., CSM parameters), adjusting values of the parameters, etc. in preparation of using the modulation function to map the distance field values. Parameter selection, setting parameter values, applying the modulation function, etc. and other operations associated with presenting content (e.g., texts, etc.) may be based upon one or more environmental conditions (e.g., orientation of the display device, light levels, viewing perspective of one or more individuals, time of day, season, etc.). Information that provides the environmental conditions may be provided to the computer system 600, for example, substantially in real-time as being collected from one or more sensors or other information sources. Information used to select parameters, select or set parameter values, determine adjustments, etc. may also reside at the computer system 600, in one or more storage devices (e.g., a storage device 604 such as a hard drive, CD-ROM, etc.), one more other types of information sources (e.g., a network connected server), etc. For example, one or more network assets (e.g., websites, web pages, etc.) may provide information (e.g., social network data) and serve as information sources. As illustrated in the figure, information and data may be locally stored. For example, provided the text to be presented, the content rendering engine 602 may produce a distance field 606 (shown stored on the storage device 604). By using a locally modulation function 608 and associated parameters 610 (e.g., both shown as being stored in storage device 604), a bitmap 612 of presentable text may be produced by applying the modulation function to the distance field. To provide this functionality the content rendering engine 602 may be provided by software, hardware, a combination of software and hardware, etc. Further, while a single computing device (e.g., located in a vehicle) may be used to provide this functionality, multiple computer systems may also be implemented (e.g., to share the computational load).

Along with operations associated with using a modulation function to map distance field values (e.g., selecting one or more parameters, setting and/or adjusting parameter values, etc.), one or more techniques and methodologies may be used by the content rendering engine 602 to present and adjust the presentation of content. For example, the content to be presented may be adjusted to improve its legibility based upon the provided environmental conditions. Adjustments may include changes to the rendering of the content being presented. For example, for textual content, the weight and sharpness of the text may be controlled. Similarly the contrast between brighter and dimmer portions of the text may be adjusted to improve legibility. Linear and nonlinear operations associated with coding and decoding values such as luminance values (e.g., gamma correction) may similarly be adjusted for textual content. Geometrical shapes associated with text (e.g., line thickness, font type, etc.) along with visual characteristics (e.g., text color, shadowing, shading, font hinting, etc.) may be adjusted by the content rendering engine 602 due to changes in pixel geometry and/or one or more environmental conditions.

The techniques and methodologies for adjusting content presentation may also include adjusting parameters of the one or more electronic displays being used to present the content. For example, lighting parameters of a display (e.g., foreground lighting levels, back lighting levels, etc.), resolution of the display, the number of bits used to represent the color of a pixel (e.g., color depth), colors associated with the display (e.g., color maps), and other parameters may be changed for adjusting the presented content.

One or more operations and algorithms may be implemented to identify appropriate adjustments for content presentation. For example, based upon the one or more of the provided environmental conditions and the content (e.g., text) to be presented, one or more substantially optimal rendering parameters (e.g., in addition to modulation function parameters) may be identified along with appropriate values by the content rendering engine 602. Once identified, the parameters may be used by the computer system 600, provided to one or more other computing devices, etc. for adjusting the content for presentation on one or more electronic displays. One or more techniques may be utilized to trigger the determination of presenting content with or without adjustments, for example, one or more detected events (e.g., user input selection, etc.) may be defined to initiate the operations of the content rendering engine 602. Adjustment trigger events may also include device orientation changes that affect content layout presentation (e.g., changing between portrait and landscape displays), changes in pixel geometry (e.g., changes between horizontal rows of RGB sub-pixel components and vertical columns). Presentation or presentation adjustments may also be determined and acted upon in a predefined manner. For example, adjustments may be determined and executed in a periodic manner (e.g., every second, fraction of a second) so that a viewer (or viewers) is given an impression that environmental conditions are periodically sampled and adjustments are regularly executed. In some arrangements, the frequency of the executed adjustment may be increased such that the viewer or viewers perceive the adjustments nearly occurring in real time. Adjustments may also be executed during one or more particular time periods, for example, in a piecewise manner. For example, adjustments may be executed more frequently during time periods when experienced environmental conditions are more troublesome (e.g., lower incident angles of the sun during the summer) and less frequent during time periods when potentially dangerous environmental conditions (e.g., periods of less glare) are generally not experienced.

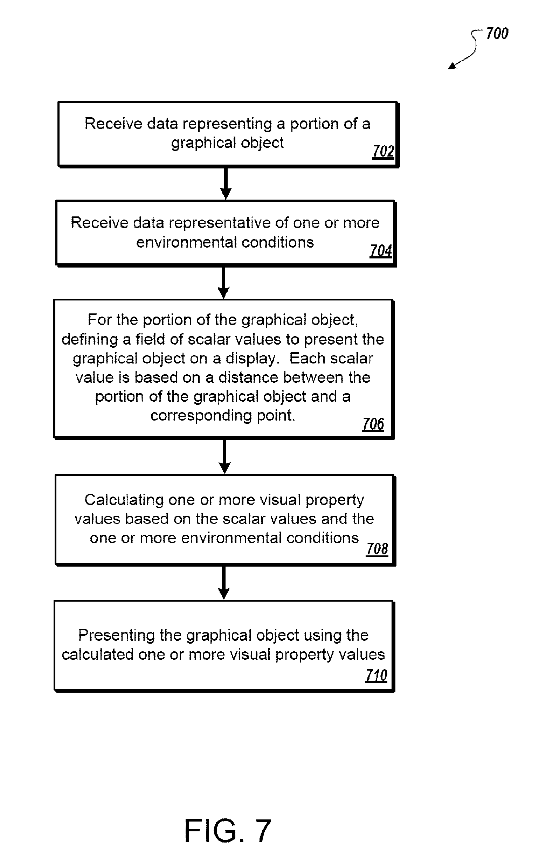

Referring to FIG. 7, a flowchart 700 represents operations of a computing device such as the computer system 600 or a process (e.g., the content rendering engine 602 shown in FIG. 6) for presenting content, adjusting content presentations, etc. on one or more electronic displays (e.g., adjusting rendering of content, adjusting modulation function parameters, etc.). Such operations, e.g., of the content rendering engine 602, are typically executed by components (e.g., processors, display controllers, etc.) included in a single computing device (e.g., the computer system 600 of FIG. 6); however, operation may be executed by multiple computing devices. Along with being executed at a single site (e.g., at the site of the computer system 600, a vehicle, etc.), operation execution may be distributed among two or more locations.

Operations may include receiving 702 data representing a portion of a graphical object. For example, a graphical object such as a glyph may be received and may be a portion of a character included in some text to be prepared for presentation. Operations may also include receiving 704 data representative of one or more environmental conditions. For example, the orientation of a device's display, ambient light level incident upon one or more electronic displays, the position and viewing angle of one or more viewers, etc. may be received by a content rendering engine. Operations may also include, for the portion of the graphical object, defining 706 a field of scalar values to present the graphical object on a display. Each scalar value may be based on a distance between the portion of the graphical object and a corresponding point. For example, the scalar value may be based on a distance between a point such as a sampling point (e.g., the center of a pixel, sub-pixel, etc.) and the nearest point or edge of the graphical object such as the outline of a glyph. In some situations, environmental changes (e.g., orientation changes to a display) may call for the distance field to be recalculated while is other situations (e.g., changes in ambient light) the values of the distance field may remain static and a modulation function, parameter of an modulation function, etc. may be changed, adjusted, etc. to address the variation in the environmental condition. As mentioned above, one or more conventions may be utilized to define the distance field values (e.g., a convention for defining positive values and negative values). Operations may also include calculating 708 one or more visual property values based on the scalar values and the one or more environmental conditions. For example, based upon an environmental condition a modulation function (e.g., CSM), a modulation parameter (e.g., stroke weight parameter), a parameter value, etc. may be selected and used with the scalar values of the distance field to define a visual property value such as a pixel value. Operations may also include presenting 710 the graphical object using the calculated one or more visual property values. For example, once the modulation function selected, one or more parameters of the function adjusted, etc. for an environmental condition, the modulation function is used to map the values of the distance field to pixel values to produce a bitmap of the graphical object (e.g., a glyph) for presentation with desirable visual characteristics (e.g., sharpening edges, softening edges, dilating and/or eroding the outline of the glyph, etc.). Along with improving computation efficiency by using one or more modulation functions to adjust the mapping of distance field values to pixel values rather than recalculating the distance field values, the modulation functions, function parameters, etc. may be more efficiently adjusted (e.g., based on an environmental condition, by a user, etc.) to provide additional flexibility. Further, in some arrangements, the operations may be executed over a relatively short period of time and in a repetitive manner such that presentation adjustments may be executed nearly in real time.

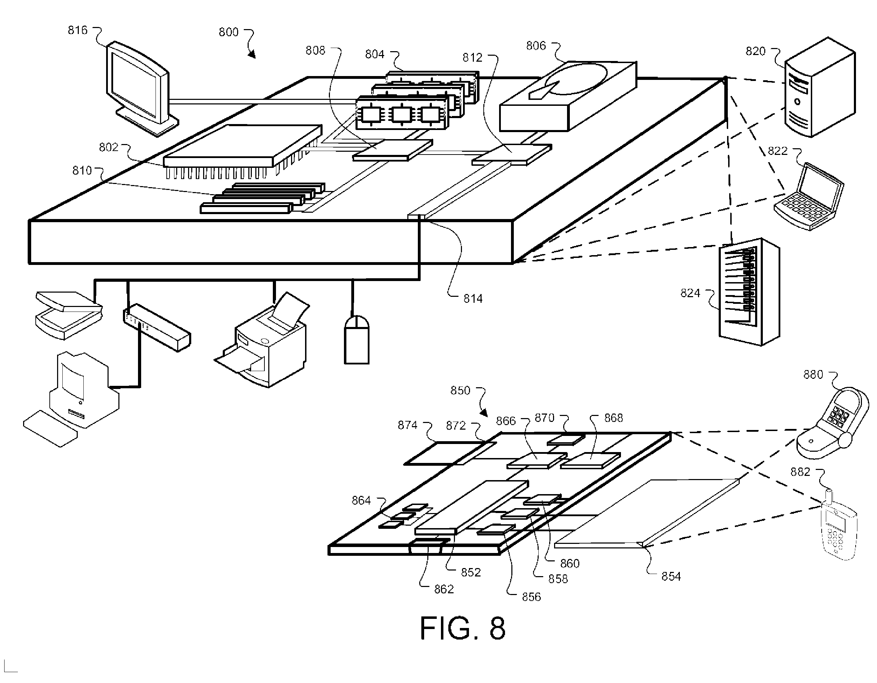

FIG. 8 shows exemplary computer device 800 and mobile computer device 850, which can be used to implement the techniques described herein. For example, a portion or all of the operations of the content rendering engine 602 may be executed by the computer device 800 and/or the mobile computer device 850. Computing device 800 is intended to represent various forms of digital computers, including, e.g., tablet computing devices, laptops, desktops, workstations, personal digital assistants, servers, blade servers, mainframes, and other appropriate computers. Computing device 850 is intended to represent various forms of mobile devices, including, e.g., personal digital assistants, cellular telephones, smartphones, and other similar computing devices. The components shown here, their connections and relationships, and their functions, are meant to be examples only, and are not meant to limit implementations of the techniques described and/or claimed in this document.

Computing device 800 includes processor 802, memory 804, storage device 806, high-speed interface 808 connecting to memory 804 and high-speed expansion ports 810, and low speed interface 812 connecting to low speed bus 814 and storage device 806. Each of components 802, 804, 806, 808, 810, and 812, are interconnected using various busses, and can be mounted on a common motherboard or in other manners as appropriate. Processor 802 can process instructions for execution within computing device 800, including instructions stored in memory 804 or on storage device 806 to display graphical data for a GUI on an external input/output device, including, e.g., display 816 coupled to high speed interface 808. In other implementations, multiple processors and/or multiple buses can be used, as appropriate, along with multiple memories and types of memory. Also, multiple computing devices 800 can be connected, with each device providing portions of the necessary operations (e.g., as a server bank, a group of blade servers, or a multi-processor system).

Memory 804 stores data within computing device 800. In one implementation, memory 804 is a volatile memory unit or units. In another implementation, memory 804 is a non-volatile memory unit or units. Memory 804 also can be another form of computer-readable medium, including, e.g., a magnetic or optical disk.

Storage device 806 is capable of providing mass storage for computing device 800. In one implementation, storage device 806 can be or contain a computer-readable medium, including, e.g., a floppy disk device, a hard disk device, an optical disk device, or a tape device, a flash memory or other similar solid state memory device, or an array of devices, including devices in a storage area network or other configurations. A computer program product can be tangibly embodied in a data carrier. The computer program product also can contain instructions that, when executed, perform one or more methods, including, e.g., those described above. The data carrier is a computer- or machine-readable medium, including, e.g., memory 804, storage device 806, memory on processor 802, and the like.

High-speed controller 808 manages bandwidth-intensive operations for computing device 800, while low speed controller 812 manages lower bandwidth-intensive operations. Such allocation of functions is an example only. In one implementation, high-speed controller 808 is coupled to memory 804, display 816 (e.g., through a graphics processor or accelerator), and to high-speed expansion ports 810, which can accept various expansion cards (not shown). In the implementation, low-speed controller 812 is coupled to storage device 806 and low-speed expansion port 814. The low-speed expansion port, which can include various communication ports (e.g., USB, Bluetooth®, Ethernet, wireless Ethernet), can be coupled to one or more input/output devices, including, e.g., a keyboard, a pointing device, a scanner, or a networking device including, e.g., a switch or router, e.g., through a network adapter.

Computing device 800 can be implemented in a number of different forms, as shown in the figure. For example, it can be implemented as standard server 820, or multiple times in a group of such servers. It also can be implemented as part of rack server system 824. In addition or as an alternative, it can be implemented in a personal computer including, e.g., laptop computer 822. In some examples, components from computing device 800 can be combined with other components in a mobile device (not shown), including, e.g., device 850. Each of such devices can contain one or more of computing device 800, 850, and an entire system can be made up of multiple computing devices 800, 850 communicating with each other.

Computing device 850 includes processor 852, memory 864, an input/output device including, e.g., display 854, communication interface 866, and transceiver 868, among other components. Device 850 also can be provided with a storage device, including, e.g., a microdrive or other device, to provide additional storage. Each of components 850, 852, 864, 854, 866, and 868, are interconnected using various buses, and several of the components can be mounted on a common motherboard or in other manners as appropriate.

Processor 852 can execute instructions within computing device 850, including instructions stored in memory 864. The processor can be implemented as a chipset of chips that include separate and multiple analog and digital processors. The processor can provide, for example, for coordination of the other components of device 850, including, e.g., control of user interfaces, applications run by device 850, and wireless communication by device 850.

Processor 852 can communicate with a user through control interface 858 and display interface 856 coupled to display 854. Display 854 can be, for example, a TFT LCD (Thin-Film-Transistor Liquid Crystal Display) or an OLED (Organic Light Emitting Diode) display, or other appropriate display technology. Display interface 856 can comprise appropriate circuitry for driving display 854 to present graphical and other data to a user. Control interface 858 can receive commands from a user and convert them for submission to processor 852. In addition, external interface 862 can communicate with processor 842, so as to enable near area communication of device 850 with other devices. External interface 862 can provide, for example, for wired communication in some implementations, or for wireless communication in other implementations, and multiple interfaces also can be used.

Memory 864 stores data within computing device 850. Memory 864 can be implemented as one or more of a computer-readable medium or media, a volatile memory unit or units, or a non-volatile memory unit or units. Expansion memory 874 also can be provided and connected to device 850 through expansion interface 872, which can include, for example, a SIMM (Single In Line Memory Module) card interface. Such expansion memory 874 can provide extra storage space for device 850, or also can store applications or other data for device 850. Specifically, expansion memory 874 can include instructions to carry out or supplement the processes described above, and can include secure data also. Thus, for example, expansion memory 874 can be provided as a security module for device 850, and can be programmed with instructions that permit secure use of device 850. In addition, secure applications can be provided through the SIMM cards, along with additional data, including, e.g., placing identifying data on the SIMM card in a non-hackable manner.

The memory can include, for example, flash memory and/or NVRAM memory, as discussed below. In one implementation, a computer program product is tangibly embodied in a data carrier. The computer program product contains instructions that, when executed, perform one or more methods, including, e.g., those described above. The data carrier is a computer- or machine-readable medium, including, e.g., memory 864, expansion memory 874, and/or memory on processor 852, which can be received, for example, over transceiver 868 or external interface 862.

Device 850 can communicate wirelessly through communication interface 866, which can include digital signal processing circuitry where necessary. Communication interface 866 can provide for communications under various modes or protocols, including, e.g., GSM voice calls, SMS, EMS, or MMS messaging, CDMA, TDMA, PDC, WCDMA, CDMA2000, or GPRS, among others. Such communication can occur, for example, through radio-frequency transceiver 968. In addition, short-range communication can occur, including, e.g., using a Bluetooth®, WiFi, or other such transceiver (not shown). In addition, GPS (Global Positioning System) receiver module 870 can provide additional navigation- and location-related wireless data to device 850, which can be used as appropriate by applications running on device 850.

Device 850 also can communicate audibly using audio codec 860, which can receive spoken data from a user and convert it to usable digital data. Audio codec 860 can likewise generate audible sound for a user, including, e.g., through a speaker, e.g., in a handset of device 850. Such sound can include sound from voice telephone calls, can include recorded sound (e.g., voice messages, music files, and the like) and also can include sound generated by applications operating on device 850.

Computing device 850 can be implemented in a number of different forms, as shown in the figure. For example, it can be implemented as cellular telephone 880. It also can be implemented as part of smartphone 882, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which can be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms machine-readable medium and computer-readable medium refer to a computer program product, apparatus and/or device (e.g., magnetic discs, optical disks, memory, Programmable Logic Devices (PLDs)) used to provide machine instructions and/or data to a programmable processor, including a machine-readable medium that receives machine instructions.

To provide for interaction with a user, the systems and techniques described here can be implemented on a computer having a display device (e.g., a CRT (cathode ray tube) or LCD (liquid crystal display) monitor) for displaying data to the user and a keyboard and a pointing device (e.g., a mouse or a trackball) by which the user can provide input to the computer. Other kinds of devices can be used to provide for interaction with a user as well; for example, feedback provided to the user can be a form of sensory feedback (e.g., visual feedback, auditory feedback, or tactile feedback); and input from the user can be received in a form, including acoustic, speech, or tactile input.

The systems and techniques described here can be implemented in a computing system that includes a back end component (e.g., as a data server), or that includes a middleware component (e.g., an application server), or that includes a front end component (e.g., a client computer having a user interface or a Web browser through which a user can interact with an implementation of the systems and techniques described here), or a combination of such back end, middleware, or front end components. The components of the system can be interconnected by a form or medium of digital data communication (e.g., a communication network). Examples of communication networks include a local area network (LAN), a wide area network (WAN), and the Internet.

The computing system can include clients and servers. A client and server are generally remote from each other and typically interact through a communication network. The relationship of client and server arises by virtue of computer programs running on the respective computers and having a client-server relationship to each other.

In some implementations, the engines described herein can be separated, combined or incorporated into a single or combined engine. The engines depicted in the figures are not intended to limit the systems described here to the software architectures shown in the figures.

Processes described herein and variations thereof (referred to as "the processes") include functionality to ensure that party privacy is protected. To this end, the processes may be programmed to confirm that a user's membership in a social networking account is publicly known before divulging, to another party, that the user is a member. Likewise, the processes may be programmed to confirm that information about a party is publicly known before divulging that information to another party, or even before incorporating that information into a social graph.

A number of embodiments have been described. Nevertheless, it will be understood that various modifications can be made without departing from the spirit and scope of the processes and techniques described herein. In addition, the logic flows depicted in the figures do not require the particular order shown, or sequential order, to achieve desirable results. In addition, other steps can be provided, or steps can be eliminated, from the described flows, and other components can be added to, or removed from, the described systems. Accordingly, other embodiments are within the scope of the following claims.

### ANNEX TO THE DESCRIPTION:

1. A computing device-implemented method comprising:
   receiving data representing a portion of a graphical object;
   receiving data representative of one or more environmental conditions;
   for the portion of the graphical object, defining a field of scalar values to present the graphical object on a display wherein each scalar value is based on a distance between the portion of the graphical object and a corresponding point;
   calculating one or more visual property values based on the scalar values and the one or more environmental conditions; and
   presenting the graphical object using the calculated one or more visual property values.
2. The computing device-implemented method of 1, wherein calculating the one or more of the visual property values includes using a modulation function for mapping the scalar values to pixel values.
3. The computing device-implemented method of 2, wherein calculating the one or more of the visual property values includes adjusting a parameter of the modulation function based on the one or more environmental conditions for mapping the scalar values to pixel values.
4. The computing device-implemented method of 3, wherein the parameter represents one of stroke weight and edge sharpness.
5. The computing device-implemented method as in any of 2 to 4, wherein the modulation function is a continuous stroke modulation.
6. The computing device-implemented method as in any of 1 to 5, wherein at least one of the one or more environmental conditions represents the physical orientation of the display.
7. The computing device-implemented method as in any of 1 to 6, wherein at least one of the one or more environmental conditions represents ambient light.
8. The computing device-implemented method as in any of 1 to 7, wherein the corresponding point represents a pixel of the display.
9. The computing device-implemented method as in any of 1 to 8, wherein the corresponding point represents a sub-pixel of the display.
10. The computing device-implemented method as in any of 1 to 9, wherein each scalar value is based on a distance to the portion of the graphical object nearest to the corresponding point.
11. The computing device-implemented method as in any of 1 to 10, wherein the graphical object is a glyph.
12. The computing device-implemented method as in any of 1 to 11, wherein environmental information includes user related information.
13. The computing device-implemented method of 12, wherein the user related information represents one of a user-specified preference and presence of a user.
14. A system comprising:
   a computing device comprising:
      a memory configured to store instructions; and
      a processor to execute the instructions to perform operations comprising:
         receiving data representing a portion of a graphical object,
         receiving data representative of one or more environmental conditions, for the portion of the graphical object, defining a field of scalar values to present the graphical object on a display, wherein each scalar value is based on a distance between the portion of the graphical object and a corresponding point,
         calculating one or more visual property values based on the scalar values and the one or more environmental conditions, and
         presenting the graphical object using the calculated one or more visual property values.
15. The system of 14, wherein calculating the one or more of the visual property values includes using a modulation function for mapping the scalar values to pixel values.
16. The system of 15, wherein calculating the one or more of the visual property values includes adjusting a parameter of the modulation function based on the one or more environmental conditions for mapping the scalar values to pixel values.
17. The system of 16, wherein the parameter represents one of stroke weight and edge sharpness.
18. The system as in any of 15 to 17, wherein the modulation function is a continuous stroke modulation.
19. The system as in any of 14 to 18, wherein at least one of the one or more environmental conditions represents the physical orientation of the display.
20. The system as in any of 14 to 19, wherein at least one of the one or more environmental conditions represents ambient light.
21. The system as in any of 14 to 20, wherein the corresponding point represents a pixel of the display.
22. The system as in any of 14 to 21, wherein the corresponding point represents a sub-pixel of the display.
23. The system as in any of 14 to 22, wherein each scalar value is based on a distance to the portion of the graphical object nearest to the corresponding point.
24. The system as in any of 14 to 23, wherein the graphical object is a glyph.
25. The system as in any of 14 to 24, wherein environmental information includes user related information.
26. The computing device-implemented method of 25, wherein the user related information represents one of a user-specified preference and presence of a user.
27. One or more computer readable media storing instructions that are executable by a processing device, and upon such execution cause the processing device to perform operations comprising:
   receiving data representing a portion of a graphical object;
   receiving data representative of one or more environmental conditions;
   for the portion of the graphical object, defining a field of scalar values for presenting the graphical object on a display, wherein each scalar value is based on a distance between the portion of the graphical object and a corresponding point;
   calculating one or more visual property values based on the scalar values and the one or more environmental conditions; and
   presenting the graphical object using the calculated one or more visual property values.
28. The computer readable media of 27, wherein calculating the one or more of the visual property values includes using a modulation function for mapping the scalar values to pixel values.
29. The computer readable media of 27, wherein calculating the one or more of the visual property values includes adjusting a parameter of the modulation function based on the one or more environmental conditions for mapping the scalar values to pixel values.
30. The computer readable media of 29, wherein the parameter represents one of stroke weight and edge sharpness.
31. The computer readable media as in any of 28 to 30, wherein the modulation function is a continuous stroke modulation.
32. The computer readable media as in any of 27 to 31, wherein at least one of the one or more environmental conditions represents the physical orientation of the display.
33. The computer readable media as in any of 27 to 32, wherein at least one of the one or more environmental conditions represents ambient light.
34. The computer readable media as in any of 27 to 33, wherein the corresponding point represents a pixel of the display.
35. The computer readable media as in any of 27 to 34, wherein the corresponding point represents a sub-pixel on the display.
36. The computer readable media as in any of 27 to 35, wherein each scalar value is based on a distance to the portion of the graphical object nearest to the corresponding point.
37. The computer readable media as in any of 27 to 36, wherein the graphical object is a glyph.
38. The computer readable media as in any of 27 to 37, wherein environmental information includes user related information.
39. The computer readable media of 38, wherein the user related information represents one of a user-specified preference and presence of a user.

## Claims

1. A computing device-implemented method comprising:
receiving data representing a portion of a graphical object;
receiving data representative of one or more environmental conditions;
for the portion of the graphical object, defining a field of scalar values to present the graphical object on a display wherein each scalar value is based on a distance between the portion of the graphical object and a corresponding point;
calculating one or more visual property values based on the scalar values and the one or more environmental conditions; and
presenting the graphical object using the calculated one or more visual property values.

2. The computing device-implemented method of claim 1, wherein calculating the one or more of the visual property values includes using a modulation function for mapping the scalar values to pixel values.

3. The computing device-implemented method of claim 2, wherein calculating the one or more of the visual property values includes adjusting a parameter of the modulation function based on the one or more environmental conditions for mapping the scalar values to pixel values.

4. The computing device-implemented method of claim 3, wherein the parameter represents one of stroke weight and edge sharpness.

5. The computing device-implemented method of any of claims 2 to 4, wherein the modulation function is a continuous stroke modulation.

6. The computing device-implemented method of any preceding claim, wherein at least one of the one or more environmental conditions represents the physical orientation of the display.

7. The computing device-implemented method of any preceding claim, wherein at least one of the one or more environmental conditions represents ambient light.

8. The computing device-implemented method of any preceding claim, wherein the corresponding point represents a pixel of the display.

9. The computing device-implemented method of any preceding claim, wherein the corresponding point represents a sub-pixel of the display.

10. The computing device-implemented method of any preceding claim, wherein each scalar value is based on a distance to the portion of the graphical object nearest to the corresponding point.

11. The computing device-implemented method of any preceding claim, wherein the graphical object is a glyph.

12. The computing device-implemented method of any preceding claim, wherein environmental information includes user related information.

13. The computing device-implemented method of claim 12, wherein the user related information represents one of a user-specified preference and presence of a user.

14. A system comprising:
a computing device comprising:
a memory configured to store instructions; and
a processor to execute the instructions to perform operations comprising:
receiving data representing a portion of a graphical object,
receiving data representative of one or more environmental conditions,
for the portion of the graphical object, defining a field of scalar values to present the graphical object on a display, wherein each scalar value is based on a distance between the portion of the graphical object and a corresponding point,
calculating one or more visual property values based on the scalar values and the one or more environmental conditions, and
presenting the graphical object using the calculated one or more visual property values.

15. One or more computer readable media storing instructions that are executable by a processing device, and upon such execution cause the processing device to perform operations comprising:
receiving data representing a portion of a graphical object;
receiving data representative of one or more environmental conditions;
for the portion of the graphical object, defining a field of scalar values for presenting the graphical object on a display, wherein each scalar value is based on a distance between the portion of the graphical object and a corresponding point;
calculating one or more visual property values based on the scalar values and the one or more environmental conditions; and
presenting the graphical object using the calculated one or more visual property values.
